# EUROPEAN PATENT SPECIFICATION

(11) **EP 4 521 798 B1**
(45) Date of publication and mention of the grant of the patent: **05.08.2026**
(21) Application number: 23822620.3
(22) Date of filing: 17.01.2023
(51) Int. Cl.: H04W 12/122, H04W 12/60, H04W 12/61, H04L 9/40

(54) **REGULATION AND CONTROL METHOD FOR NETWORK CONNECTION REQUEST, CONTROLLER, BASE STATION, AND STORAGE MEDIUM**
REGULIERUNGS- UND STEUERUNGSVERFAHREN FÜR NETZWERKVERBINDUNGSANFORDERUNG, STEUERUNG, BASISSTATION UND SPEICHERMEDIUM
PROCÉDÉ DE RÉGULATION ET DE COMMANDE POUR UNE DEMANDE DE CONNEXION DE RÉSEAU, DISPOSITIF DE COMMANDE, STATION DE BASE ET SUPPORT DE STOCKAGE

(30) Priority: 15.06.2022 CN 202210675994
(43) Date of publication of application: 12.03.2025
(73) Proprietor: ZTE Corporation, Shenzhen, Guangdong 518057 (CN)
(72) Inventor: SANG, Jian, Shenzhen, Guangdong 518057 (CN); LI, Yan, Shenzhen, Guangdong 518057 (CN)
(74) Representative: Zoli, Filippo
(86) International application number: PCT/CN2023/072730
(87) International publication number: WO 2023/241048

(56) References cited:
- EP-A1- 4 021 050
- WO-A1-2021/057289
- CN-A- 102 739 683
- CN-A- 106 453 421
- CN-A- 108 667 829
- CN-A- 111 628 982
- US-A1- 2007 121 596
- US-A1- 2019 334 940
- HEUNG YOUL YOUM SOONCHUNHYANG UNIVERSITY KOERA (REPUBLIC OF) KEUNDUG PARK SEOUL UNIVERSITY OF FOREIGN STUDIES KOREA (REPUBLIC OF): "6th Revised baseline text for X.5Gsec-guide: Security guidelines for 5G communication system;TD126", vol. 2/17, 16 March 2022 (2022-03-16), pages 1 - 33, XP044341644, Retrieved from the Internet <URL:https://www-api.itu.int/ifa/t/2022/sg17/docs/220510/td/ties/plen/T22-SG17-220510-TD-PLEN-0126!!ZIP-E.zip TD126-revision mode .docx> [retrieved on 20220316]
- JUN LIU, ZHE LI, HUANG YU: "MAC Protocol Based on Reputation Mechanism in Ad Hoc Networks", COMPUTER ENGINEERING, SHANGHAI JISUANJI XUEHUI, CN, vol. 34, no. 11, 5 June 2008 (2008-06-05), CN , pages 143 - 145, XP093117590, ISSN: 1000-3428, DOI: 10.3969/j.issn.1000-3428.2008.11.051
- WEI ZHANG, MA ZHAOYANG: "Introduction and Implementation of Network Access Management Solution Based on Terminal Behavior Credibility", COMPUTER & DIGITAL ENGINEERING, vol. 45, no. 1, 20 January 2017 (2017-01-20), pages 115 - 121, XP093117597

## Description

### TECHNICAL FIELD

The present disclosure relates to the technical field of base stations, in particular to a network connection request regulation method, a controller, a base station and a storage medium.

### BACKGROUND

Whenever users have data service needs, experience location updates, receive network paging messages, or encounter other scenarios requiring a User Equipment (UE) to establish a connection with a network, the UE, be it a Long Term Evolution (LTE) UE or a New Radio (NR) UE, will send a network connection request message to a base station of a wireless access node. Following a series of message exchanges with the base station, a wireless connection is successfully established before data transmission occurs. For LTE and NR systems, the 3GPP standards organization has only defined and standardized the authentication process between UE users and a core network, leaving the authentication process between UE users and wireless access network nodes unspecified. This results in wireless access networks being vulnerable to potential malicious attacks by UE users.

In the interaction phase of the signaling process, attackers typically employ a half-connection approach to conduct Denial of Service (DoS) or Distributed Denial of Service (DDoS) attacks on the base station. That is, once the base station receives a UE network connection request, during the wait for UE response messages, attackers intentionally refrain from sending response messages and instead rapidly initiate new network connection requests, aiming to occupy the wireless network resources of the base station for an extended period. This continues until all the network resources of the base station are depleted, thereby making legitimate users unable to access the wireless network service of the base station.

In WO 2021/057289 A1, an abnormal terminal identifying method and apparatus, a base station, and a storage medium are disclosed. The method includes: collecting communication data with terminals within a set time period; and identifying an abnormal terminal by means of self-learning according to the communication data with the terminals.

US 2007/0121596 A1 provides a system, method and apparatus for providing network level and nodal level vulnerability protection in VoIP networks by receiving a communication, filtering the received communication using three or more stages selected from the group comprising a media protection and filtering plane, a policy based filtering plane, a signature based filtering plane, a protocol anomaly detection and filtering plane and a behavioral learning based filtering plane, and either allowing or denying the received communication based the filtering step.

Heung Youl Youm et al. provide security guidelines for the IMT-2020 communication system in "6th Revised baseline text for X.5Gsec-guide: Security guidelines for 5G communication system; TD126". It identifies all components related to the security of the IMT-2020 communication system, describes generic IMT-2020 architecture and its domains, identifies threats to and provides security capabilities of each component, taking into account unique network features.

### SUMMARY

Embodiments of the present disclosure provide a network connection request regulation method, a controller, a base station and a storage medium.

The features of the network connection request regulation method, the controller, the base station and the storage medium according to embodiments of the present disclosure are set out in the appended set of claims.

### BRIEF DESCRIPTION OF DRAWINGS

FIG. 1 is a flowchart of a regulation method according to an embodiment of the present disclosure;
FIGS. 2 and 3 illustrate signaling interaction between an LTE base station and a UE according to an embodiment of the present disclosure;
FIGS. 4-8 illustrate signaling interaction between an NR base station and a UE according to an embodiment of the present disclosure;
FIG. 9 is a flowchart of constructing a profile for a UE according to an embodiment of the present disclosure;
FIG. 10 is a flowchart of randomly discarding a network connection request initiated by a UE according to an embodiment of the present disclosure;
FIG. 11 is a flowchart of executing an aging mechanism according to an embodiment of the present disclosure;
FIG. 12 is a module connection diagram of a base station according to an embodiment of the present disclosure; and
FIG. 13 is a schematic diagram of a controller according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the embodiments described herein are only intended to explain the present disclosure, and are not intended to limit the present disclosure.

With the development of wireless networks, the possibility of base station attacks also increases, which may result in ordinary users being unable to use the resources of base stations. There are many types of network attacks, among which Dos or DDoS attacks (also known as flooding attacks) are relatively common. The attackers (UE) generally have the following characteristics.
1. An identity of the attacker is fixed, that is, the identity remains the same during the attack.
2. The identity of the attacker is not fixed, that is, the identity changes with each attack.
3. In order to achieve attack objectives rapidly, the attackers generally disregard protocol processes and do not adhere to base station penalty policies.
4. Attackers often initiate network connection requests and release network connections frequently.

Upon detection of the mentioned attack behavior, the base station activates pre-configured defense mechanisms to prevent consequences such as base station paralysis due to attacks. However, current defense mechanisms either consume excessive base station resources or respond too slowly, failing to promptly stop attacks, and thus their effectiveness is not ideal.

Based on this, embodiments of the present disclosure provide a network connection request regulation method, a controller, a base station and a storage medium. By constructing corresponding profiles for a UE to represent current credibility of the UE, when the UE exhibits abnormal network connection request behavior, a base station proactively reduces the current credibility and probabilistically discards a network connection request from the UE based on the current credibility, preventing the current UE from causing serious damage to the base station, thus ensuring the normal operation of the base station.

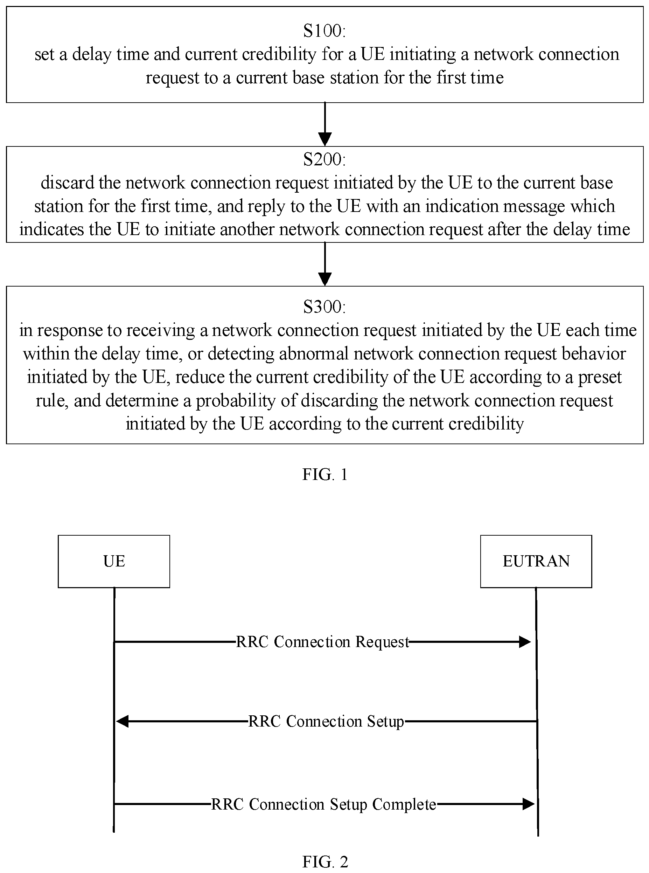

Referring to FIG. 1, a regulation method provided by an embodiment of the present disclosure includes, but is not limited to, the following steps S100 to S300.

At S100, a delay time and current credibility are set for a UE initiating a network connection request to a current base station for the first time.

At S200, the network connection request initiated by the UE to the current base station for the first time is discarded, and the UE is replied to with an indication message which indicates the UE to initiate another network connection request after the delay time.

At S300, in response to receiving a network connection request initiated by the UE each time within the delay time, or detecting abnormal network connection request behavior initiated by the UE, the current credibility of the UE is reduced according to a preset rule, and a probability of discarding the network connection request initiated by the UE is determined according to the current credibility.

The embodiments of the present disclosure are applied to LTE or NR wireless access networks. A UE which has a network connection need sends a relevant network connection request message to a base station, and through a series of signaling interaction processes with the base station, completes registration on the network side, leading to final access to the data transmission service.

The network connection request message from the UE may be the following messages, each message containing identity information corresponding to the UE:
● LTE RRC Connection Request
● LTE RRC Connection Reestablishment Request
● NR RRC Setup Request
● NR RRC Reestablishment Request
● NR RRC Resume Request and RRC Resume Request1

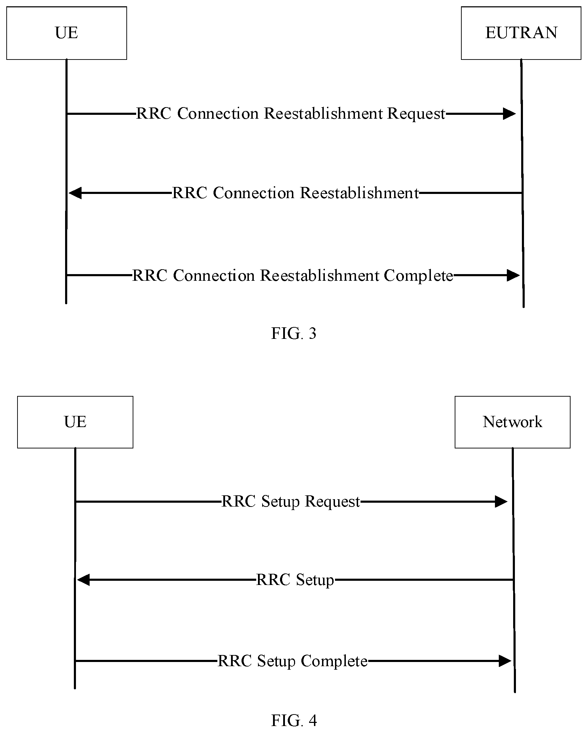

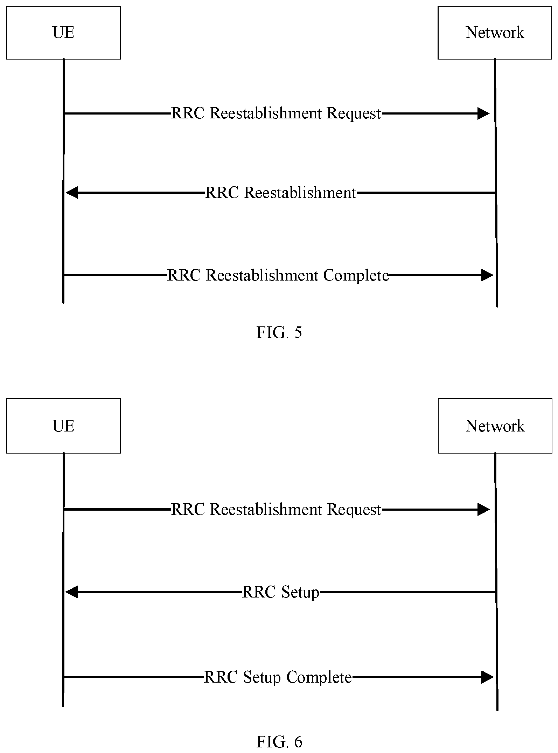

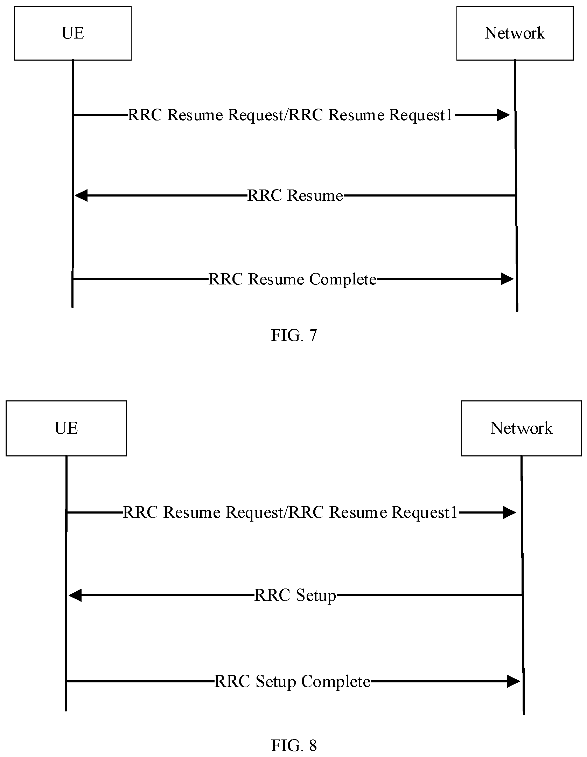

For an LTE wireless system, the network connection request signaling process initiated by the UE can be understood by referring to FIGS. 2-3. After receiving the network connection request message, an LTE base station replies with a signaling message RRC Connection Setup or RRC Connection Reestablishment, and waits for the UE to reply with a signaling message RRC Connection Setup Complete or RRC Connection Reestablishment Complete. For an NR wireless system, the network connection request signaling process initiated by the UE can be understood by referring to FIGS. 4-8. After receiving the network connection request message, an NR base station replies with a signaling message RRC Setup, RRC Reestablishment or RRC Resume, and waits for the UE to reply with a signaling message RRC Setup Complete, RRC Reestablishment Complete or RRC Resume Complete. It can be seen from the above signaling interaction process that, upon receiving the network connection request from the UE (the base station assigns corresponding radio channel resources to the UE and establishes UE context), the network side responds to the UE and then enters a state of waiting for a response message from the UE. Taking advantage of this feature, the attacker refrains from responding to the base station after receiving the network connection request response message from the network side, but quickly sends the next network connection request message, maliciously occupying a large amount, even all of the base station resources, ultimately causing the base station unable to provide the wireless data service for other ordinary UE.

Of course, in addition to the above signaling interaction process, the UE also needs to engage in additional signaling interaction with the base station before conducting network data transmission with the base station. During the subsequent signaling interaction processes, abnormal network connection request behavior of the UE may occur, which will also occupy the resources of the base station and affect the normal operation of the base station. Therefore, in response to detecting abnormal network connection request behavior initiated by the UE, the above regulation method also needs to be implemented to restrict the behavior of the UE, that is, credibility establishment and update mechanisms.

During the valid period of the regulation method, for each network connection request received by the base station, the base station determines an identity of the initiator UE from the network connection request message, and constructs a profile for the UE. The initial profile includes identity information and initial credibility corresponding to the UE, and the initial credibility is used as the current credibility for regulation.
1. In response to the UE initiating a network connection request to the current base station for the first time during the valid period of the regulation method, the current base station directly discards the network connection request, that is, does not assign any radio channel resources to the network connection request;
2. An appropriate credibility establishment mechanism is activated according to the type of the network connection request. The current credibility C0 of the UE is a maximum preset credibility value (for example, C0=100), and a delay time T_{delay} is set for the UE. Then, the base station replies to the UE with a network connection request rejection message which instructs the UE to initiate another network connection request after the delay time.
3. A current credibility update mechanism for the UE is as follows: for each network connection request received by the base station, the identity of the initiator UE is also extracted from the network connection request message and matched with UE identity information stored in the base station; and in response to obtaining a matching result showing that it is the second or subsequent network connection request initiated by the UE and the network connection request occurring before the delay time, the current credibility of the UE is updated according to a certain rule, such that the current credibility of the UE is reduced.
4. A probability value is obtained according to the current credibility of the UE, and the network connection request currently initiated by the UE is discarded according to the probability value.

Through the above method, it becomes increasingly challenging for the same attacker who initiates multiple network connection requests in a short time to receive responses from the base station. Additionally, multiple attackers who initiate multiple network connection requests within a short period all need to wait the delay time before receiving responses from the base station. This can significantly and rapidly reduce the scale of attacks on the base station, or even prevent attacks entirely. Regarding legitimate UE requesting access, although it will be required to reconnect after the delay time, resulting in slightly increased network latency, it remains within an acceptable range.

It is worth noting that, for the current credibility update mechanism, in addition to the delay time, abnormal network connection request behavior initiated by the UE during subsequent signaling interaction processes can also trigger an update to the current credibility of the UE. These abnormal factors include one of the following:
(1) after receiving the network connection request initiated by the UE and replying to the UE with an interactive message, the current base station waits for a response message from the UE for a duration exceeding a preset time; or
(2) a frequency of establishing and releasing connections between the UE and the current base station exceeds a preset frequency value; or
(3) a number of connections established between the UE and the current base station exceeds a preset number, and no service data are generated after each connection is established.

The factor (1) refers to a situation where, after the base station has properly handled the network connection request from the UE and replied to the UE, the base station expects certain messages, but the UE remains unresponsive to the base station for a long time. These messages include: RRC Setup Complete, RRC Reestablishment Complete, RRC Resume Complete, Security Mode Complete, RRC Reconfiguration Complete, UL InformationTransfer, UE Capability Information, and other uplink messages. The factor (2) indicates that the frequency of network connection establishment and release between the UE and the base station is too high, with the count being recorded by the network side based on the identity of the UE. The factor (3) is that the UE accesses the network many times without any service data transmission occurring during each access.

Therefore, the above regulation method also includes: in response to detecting abnormal network connection request behavior initiated by the UE, reducing the current credibility of the UE according to a preset rule, and determining a probability of discarding the network connection request initiated by the UE according to the current credibility.

It should be understood that the above regulation method can be applied during the normal operation of the base station, but it will affect the delay for the UE to access the base station, and the current credibility of the UE cannot be continuously reduced, so it is necessary to combine additional measures (such as restoring the current credibility of the UE) for regulation; and it is also possible to execute the regulation method during a flooding attack, that is, when the base station detects a flooding attack based on a network connection request initiated by an external source, regulating the network connection requests initiated by the UE solely during the flooding attack period.

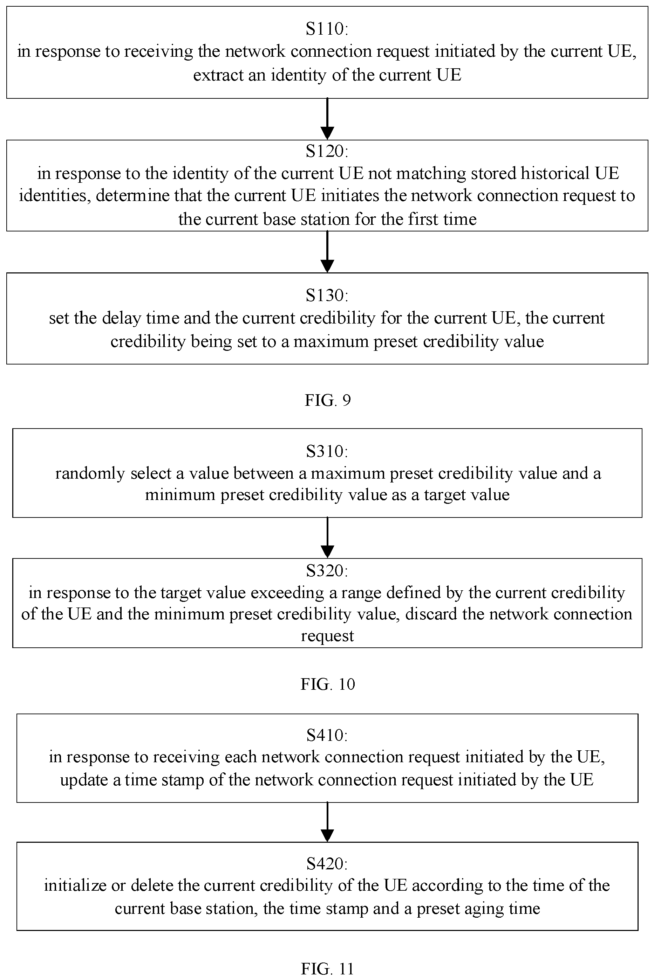

Referring to FIG. 9, in some embodiments, the process of determining whether the UE is connected for the first time and constructing a profile includes the following steps.

At S110, in response to receiving the network connection request initiated by the current UE, an identity of the current UE is extracted.

At S120, in response to the identity of the current UE not matching stored historical UE identities, it is determined that the current UE initiates the network connection request to the current base station for the first time.

At S130, the delay time and the current credibility are set for the current UE, the current credibility being set to a maximum preset credibility value.

As previously mentioned, for each network connection request received by the base station, the base station determines the identity of the initiator UE from the network connection request message. When it is determined that the UE initiates the network connection request to the base station for the first time during the regulation method, the identity of the UE is saved and the delay time and current credibility are set for the UE. The current credibility can be set to the maximum preset credibility value.

When the UE initiates another network connection request after the delay time, since a credibility penalty mechanism is not triggered, the current credibility of the UE will not be reduced, and the UE is highly likely to receive a response from the base station (for example, the corresponding probability of the maximum preset credibility value is 100%). On the contrary, when the UE initiates another network connection request before the delay time, the credibility penalty mechanism will be triggered, and the probability of receiving a response from the base station will be reduced.

There are many ways to reduce the current credibility, among which three ways will be introduced below by using Cn to represent an n^{th} updated value of the current credibility of the UE, with n being a positive integer.
(1) Cn-1 corresponding to an n-1^{th} network connection request is reduced by a preset multiple to obtain Cn as the current credibility.
(2) Cn-1 corresponding to an n-1^{th} network connection request is reduced by a preset value to obtain Cn as the current credibility.
(3) Cn is determined as the current credibility according to a preset convergence function and a value of n, the preset convergence function converging to a minimum preset credibility value with the increase of the value of n.

The first updating method is iterative updating. In an embodiment, in response to the preset multiple being 2, Cn=(1/2)Cn-1. Every time the UE initiates a network connection request within the delay time, the current credibility will be rapidly reduced. The second updating method is to update data according to a specified sequence. In an embodiment, Cn is taken sequentially from the arithmetic sequence S {100, 95, 75, 50, ... , 5, 0}, where 100 is the maximum preset credibility value, and 0 is the minimum preset credibility value. The specified sequence can also be a non-arithmetic sequence, in another embodiment, with smaller differences between adjacent numbers at the beginning and increasing differences between adjacent numbers as the sequence progresses. The third updating method adopts the preset convergence function, such as Cn=f(n). Similarly, as the value of n increases, Cn converges, and when necessary, f(n) can be a fast convergence function.

It can be understood that the maximum preset credibility value and the minimum preset credibility value of Cn can be set according to actual needs. In order to facilitate subsequent explanations, in the embodiments of the present disclosure, the maximum preset credibility value is set to 100 and the minimum preset credibility value is set to 0.

The probability of discarding the network connection request initiated by the UE is determined according to the current credibility, different probability calculation methods can be adopted according to different situations, and one of the methods will be illustrated below. Referring to FIG. 10, the above step S300 includes the following steps.

At S310, a value between a maximum preset credibility value and a minimum preset credibility value is randomly selected as a target value.

At S320, in response to the target value exceeding a range defined by the current credibility of the UE and the minimum preset credibility value, the network connection request is discarded.

For each network connection request message, the base station randomly generates a value R as a target value within the range [1, C0] (the maximum preset credibility value C0 is 100 and the minimum preset credibility value is 0 as defined before). The current credibility of the UE is Cn, and the base station determines whether R falls within the range [1, Cn]. If so, the base station normally processes the current network connection request message of the UE. If not, the base station discards the current network connection request message of the UE. Therefore, it can be seen that for UE with the current credibility Cn, the probability of its network connection request being processed normally by the base station is Cn/C0, and for UE with current credibility C0 (initial value), its network connection request message will definitely be processed normally by the base station.

For the current credibility, an embodiment of the present disclosure also provides an aging mechanism for invalidating UE profile data to facilitate normal UE access after a period of time. Referring to FIG. 11, the aging mechanism may include the following steps.

At S410, in response to receiving each network connection request initiated by the UE, a time stamp of the network connection request initiated by the UE is updated.

At S420, the current credibility of the UE is initialized or deleted according to the time of the current base station, the time stamp and a preset aging time.

According to a time stamp of a latest network connection request of each UE and the preset aging time T_{aging}, the profile data of the UE are deleted, that is, in response to a UE having not initiated a network connection request for a long time, the base station can restore the current credibility of the UE to the initialization value, or directly empty the data of the current credibility, and initialize its current credibility when the UE initiates a network connection request next time. The length of the preset aging time T_{aging} can be set based on factors such as the capability of base station hardware, the current attack scale, or the length of the UE location update cycle.

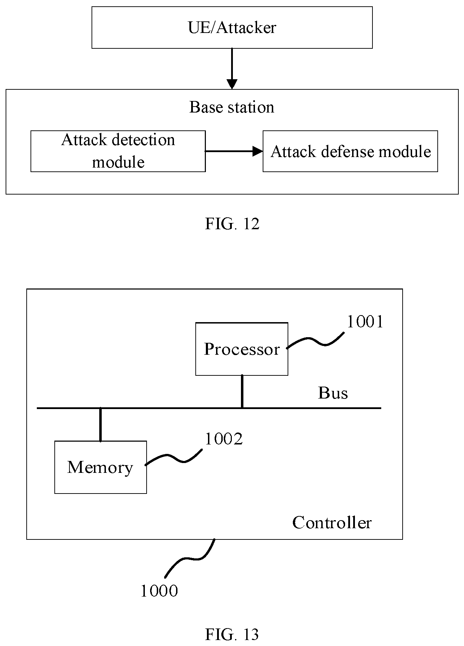

Referring to FIG. 12, an embodiment of the present disclosure also provides a base station, including:
an attack detection module configured to detect a flooding attack based on a network connection request; and
an attack defense module configured to execute or stop execution of the regulation method as described above according to a detection result of the attack detection module.

Here, the attack detection module constantly detects network connection requests from all UEs in a certain way. When an attack is detected, the attack detection module notifies the attack defense module to commence defense operations. Upon receiving the attack occurrence notification, the attack defense module activates a defense mechanism, that is, the regulation method as described above. In response to detecting that the attack is stopped, the attack detection module notifies the attack defense module to stop the defense. Moreover, when the defense is stopped, the base station can directly clear the UE profile data, and current credibility setting is not necessary for the UE with normal access afterwards.

Through various steps of the aforementioned regulation method and corresponding implementation by the base station, attackers may initially receive responses from the base station via the UE, but will be instructed to delay access. The probability of the base station responding to network connection requests initiated by the attacker subsequently decreases as the current credibility declines. This makes it increasingly difficult for the attacker to occupy the resources of the base station, effectively reducing the impact of DoS attacks and ensuring the reliability of the wireless network service provided by the base station.

An embodiment of the present disclosure also provides a controller, including at least one processor and a memory configured to communicate with the at least one processor, where the memory stores instructions executable by the at least one processor, and the instructions, when executed by the at least one processor, cause the at least one processor to execute the regulation method as described above.

Please refer to FIG. 13, where a control processor 1001 and a memory 1002 in a controller 1000 are connected via a bus. As a non-transitory computer-readable storage medium, the memory 1002 may be configured to store a non-transitory software program and a non-transitory computer-executable program. In addition, the memory 1002 may be a high-speed random-access memory or a non-transitory memory, in an embodiment, at least one magnetic disk storage device, a flash memory device, or another non-transitory solid-state storage device. In some implementations, the memory 1002 may be a memory remotely located with respect to the control processor 1001, which may be connected to the controller 1000 via a network. Examples of the above-mentioned network include, but are not limited to, the Internet, an intranet, a local area network, a mobile communication network, and a combination thereof.

It can be understood by those of ordinary skill in the art that the device structure shown in FIG. 13 does not constitute a limitation to the controller 1000, and more or fewer components, or a combination of certain components, or a different component arrangement is possible.

An embodiment of the present disclosure also provides a computer-readable storage medium which stores computer-executable instructions which, when executed by one or more control processors, In an embodiment, the control processor 1001 shown in FIG. 13, can cause the one or more control processors to execute the regulation method in the above method embodiment, in an embodiment, execute the above-described method steps S100 to S300 in FIG. 1, S110 to S130 in FIG. 9, S310 to S320 in FIG. 10, and S410 to S420 in FIG. 11.

The device embodiments described above are only for illustration. The units described as separate components may or may not be physically separated, that is, they may be located at one place or distributed to multiple network units. Some or all of the modules can be selected according to actual needs to achieve the purpose of the embodiment.

The network connection request regulation method, the controller, the base station and the storage medium provided by the embodiments of the present disclosure have at least the following beneficial effects. During the valid period of the regulation method, for any UE accessing the current base station for the first time, the current base station discards the network connection request initiated by the UE, and allows the UE to initiate another network connection request after the delay time; in response to the UE initiating another network connection request during the delay time or encountering anomalies during the subsequent signaling interaction with the current base station, it is considered that the UE has the possibility of launching an attack, so the current credibility of the UE is reduced, and the probability of the current base station discarding the network connection request initiated by the UE is determined based on the current credibility; and in this way, attackers may initially receive responses from the base station via the UE, but will be instructed to delay access, the probability of the base station responding to network connection requests initiated by the attacker subsequently decreases as the current credibility declines, and this makes it increasingly difficult for the attacker to occupy the resources of the base station, effectively reducing the impact of DoS attacks and ensuring the reliability of the wireless network service provided by the base station.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage device, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

## Claims

1. A network connection request regulation method, performed by a current base station, comprising:
in response to receiving the network connection request initiated by a current User Equipment, UE, extracting an identity of the current UE (110);
in response to the identity of the current UE not matching stored historical UE identities, determining that the current UE initiates the network connection request to the current base station for the first time (120);
setting a delay time and current credibility for the current UE initiating a network connection request to the current base station for the first time (100);
discarding the network connection request initiated by the current UE to the current base station for the first time, and replying to the current UE with an indication message which indicates the current UE to initiate another network connection request after the delay time (200); and
in response to receiving a network connection request initiated by the current UE each time within the delay time, or detecting abnormal network connection request behavior initiated by the current UE, reducing the current credibility of the current UE according to a preset rule;
randomly selecting a value between a maximum preset credibility value and a minimum preset credibility value as a target value (310); and
in response to the target value exceeding a range defined by the current credibility of the UE and the minimum preset credibility value, discarding the network connection request initiated by the current UE (320);
wherein the current credibility is associated with abnormal network connection request behavior initiated by the current UE.

2. The regulation method of claim 1, wherein the regulation method is used during a period when the current base station detects a flooding attack based on the network connection request.

3. The regulation method of claim 1, wherein for an n^{th} network connection request initiated by the current UE within the delay time, the preset rule is one of the following:
reducing Cn-1 corresponding to an n-1^{th} network connection request by a preset rate of Cn-1 to obtain Cn as the current credibility; or
reducing Cn-1 corresponding to an n-1^{th} network connection request by a preset value to obtain Cn as the current credibility; or
determining Cn as the current credibility according to a preset convergence function and a value of n, the preset convergence function converging to a minimum preset credibility value with the increase of the value of n;
Cn representing an n^{th} updated value of the current credibility of the current UE, and n being a positive integer.

4. The regulation method of claim 1, wherein the abnormal network connection request behavior comprises at least one of the following:
after receiving the network connection request initiated by the current UE and replying to the current UE with an interactive message, the current base station waits for a response message from the current UE for a duration exceeding a preset time; or
a frequency of establishing and releasing connections between the current UE and the current base station exceeds a preset frequency value; or
a number of connections established between the current UE and the current base station exceeds a preset number, and no service data are generated after each connection is established.

5. The regulation method of claim 1, further comprising:
in response to receiving each network connection request initiated by the current UE, updating a time stamp of the network connection request initiated by the current UE (410); and
initializing or deleting the current credibility of the current UE according to the time of the current base station, the time stamp and a preset aging time (420).

6. A controller, comprising at least one processor and a memory configured to communicate with the at least one processor, wherein the memory stores instructions executable by the at least one processor, and the instructions, when executed by the at least one processor, cause the at least one processor to execute the regulation method of any one of claims 1-5.

7. A base station, BS, comprising the controller of claim 6.

8. A non-transitory computer-readable storage medium, storing computer-executable instructions configured to cause a computer to execute the regulation method of any one of claims 1-5.

## Patentansprüche

1. Netzverbindungsanforderung-Regulierungsverfahren durchgeführt von einer aktuellen Basisstation, umfassend:
als Reaktion auf ein Empfangen einer Netzverbindungsanforderung, die von einem aktuellen Benutzergerät, UE, initiiert wird, Extrahieren einer Identität des aktuellen UE (110);
als Reaktion darauf, dass die Identität des aktuellen UE nicht mit gespeicherten historischen UE-Identitäten übereinstimmt, Bestimmen, dass das aktuelle UE die Netzverbindungsanforderung mit der aktuellen Basisstation zum ersten Mal initiiert (120);
Festlegen einer Verzögerungszeit und einer aktuellen Glaubwürdigkeit für das aktuelle UE, das eine Netzverbindungsanforderung an die aktuelle Basisstation zum ersten Mal initiiert (100);
Verwerfen der Netzverbindungsanforderung, die von dem aktuellen UE an die aktuelle Basisstation zum ersten Mal initiiert wird und Antworten dem aktuellen UE mit einer Indikationsmeldung, die dem aktuellen UE angibt, nach der Verzögerungszeit eine weitere Netzverbindungsanforderung zu initiieren (200); und
als Reaktion auf ein Empfangen einer Netzverbindungsanforderung, die von dem aktuellen UE jeweils innerhalb der Verzögerungszeit initiiert wird, oder ein Bestimmen eines anormalen Verhaltens der Netzverbindungsanforderung, die von dem aktuellen UE initiiert wird, Reduzieren der aktuellen Glaubwürdigkeit des aktuellen UE gemäß einer voreingestellten Regel;
zufälliges Auswählen eines Werts zwischen einem voreingestellten maximalen Glaubwürdigkeitswert und einem voreingestellten minimalen Glaubwürdigkeitswert als Zielwert (310); und
als Reaktion darauf, dass der Zielwert einen Bereich überschreitet, der durch die aktuelle Glaubwürdigkeit des UE und den voreingestellten minimalen Glaubwürdigkeitswert definiert ist, Verwerfen der von dem aktuellen UE initiierten Netzverbindungsanforderung (320);
wobei die aktuelle Glaubwürdigkeit mit einem anormalen Verhalten der Netzverbindungsanforderung, die von dem aktuellen UE initiiert wird, assoziiert ist.

2. Regulierungsverfahren nach Anspruch 1, wobei das Regulierungsverfahren in einem Zeitraum verwendet wird, in dem die aktuelle Basisstation basierend auf der Netzverbindungsanforderung einen Flooding-Angriff erkennt.

3. Regulierungsverfahren nach Anspruch 1, wobei die voreingestellte Regel für eine n-te Netzverbindungsanforderung, die von dem aktuellen UE innerhalb der Verzögerungszeit initiiert wird, eine der Folgenden ist:
Reduzieren Cn-1, das der einer n-1-ten Netzverbindungsanforderung entspricht, um eine voreingestellte Rate von Cn-1, um Cn als die aktuelle Glaubwürdigkeit zu erlangen; oder
Reduzieren Cn-1, das der einer n-1-ten Netzverbindungsanforderung entspricht, um einen voreingestellten Wert, um Cn als die aktuelle Glaubwürdigkeit zu erlangen; oder
Bestimmen von Cn als die aktuelle Glaubwürdigkeit gemäß einer voreingestellten Konvergenzfunktion und einem Wert von n, wobei die voreingestellte Konvergenzfunktion mit steigendem Wert von n zu einem minimalen voreingestellten Glaubwürdigkeitswert konvergiert;
wobei Cn einen n-ten aktualisierten Wert der aktuellen Glaubwürdigkeit des aktuellen UE darstellt, und n eine positive ganze Zahl ist.

4. Regulierungsverfahren nach Anspruch 1, wobei das anormale Verhalten der Netzverbindungsanforderung mindestens eines der Folgenden umfasst:
nach Empfangen der von dem aktuellen UE initiierten Netzverbindungsanforderung und nach dem Antworten an das aktuelle UE mit einer interaktiven Nachricht wartet die aktuelle Basisstation auf eine Antwortmeldung von dem aktuellen UE über eine Dauer, die eine voreingestellte Zeit überschreitet; oder
eine Häufigkeit eines Herstellens und Trennens von Verbindungen zwischen dem aktuellen UE und der aktuellen Basisstation überschreitet einen voreingestellten Häufigkeitswert; oder
eine Anzahl von Verbindungen, die zwischen dem aktuellen UE und der aktuellen Basisstation hergestellt werden, überschreitet eine voreingestellte Anzahl, und nach Herstellen jeder Verbindung werden keine Dienstdaten generiert.

5. Regulierungsverfahren nach Anspruch 1, ferner umfassend:
als Reaktion auf ein Empfangen jeder Netzverbindungsanforderung, die von dem aktuellen UE initiiert werden, Aktualisieren eines Zeitstempels der Netzverbindungsanforderung, die von dem aktuellen UE initiiert wird (410); und
Initialisieren oder Löschen der aktuellen Glaubwürdigkeit des aktuellen UE gemäß der Zeit der aktuellen Basisstation, dem Zeitstempel und einer voreingestellten Alterungszeit (420).

6. Steuerung, umfassend mindestens einen Prozessor und einen Speicher, der konfiguriert ist, um mit dem mindestens einen Prozessor zu kommunizieren, wobei der Speicher Anweisungen speichert, die von dem mindestens einen Prozessor ausführbar sind, und die Anweisungen, wenn sie von dem mindestens einen Prozessor ausgeführt werden, den mindestens einen Prozessor veranlassen, das Regulierungsverfahren gemäß einem der Ansprüche 1-5 auszuführen.

7. Basisstation, BS, umfassend die Steuerung nach Anspruch 6.

8. Nichtflüchtiges, computerlesbares Speichermedium, das computerausführbare Anweisungen speichert, die konfiguriert sind, um einen Computer veranlassen, das Regulierungsverfahren nach einem der Ansprüche 1-5 auszuführen.

## Revendications

1. Procédé de régulation d'une demande de connexion au réseau, mis en œuvre par une station de base actuelle, comprenant :
en réponse à la réception de la demande de connexion au réseau initiée par un équipement utilisateur, UE, actuel, extraire l'identité de l'UE actuel (110) ;
en réponse à l'absence de correspondance entre l'identité de l'UE actuel aux identités historiques enregistrées de l'UE, déterminer que l'UE actuel initie pour la première fois la demande de connexion au réseau auprès de la station de base actuelle (120) ;
la configuration d'un délai et d'une crédibilité actuelle pour l'UE actuel qui initie pour la première fois une demande de connexion au réseau auprès de la station de base actuelle (100) ;
le rejet de la demande de connexion au réseau initiée pour la première fois par l'UE actuel à destination de la station de base actuelle, et l'envoi d'une réponse à l'UE actuel par un message indiquant d'initier une nouvelle demande de connexion au réseau à l'issue du délai (200) ; et
en réponse à la réception d'une demande de connexion au réseau initiée par l'UE actuel à chaque fois dans le délai imparti, ou à la détection d'un comportement anormal de la demande de connexion au réseau initiée par l'UE actuel, réduire la crédibilité actuelle de l'UE actuel selon une règle prédéfinie ;
la sélection aléatoire d'une valeur comprise entre une valeur maximale prédéfinie de crédibilité et une valeur minimale prédéfinie de crédibilité comme valeur cible (310) ; et
en réponse au dépassement de la valeur cible d'une plage définie par la crédibilité actuelle de l'UE et la valeur minimale prédéfinie de crédibilité, rejeter la demande de connexion au réseau initiée par l'UE actuel (320) ;
dans lequel la crédibilité actuelle est associée à un comportement anormal de la demande de connexion au réseau initiée par l'UE actuel.

2. Procédé de régulation selon la revendication 1, dans lequel ledit procédé de régulation est utilisé pendant une période au cours de laquelle la station de base actuelle détecte une abondance d'attaques sur la base de la demande de connexion au réseau.

3. Procédé de régulation selon la revendication 1, dans lequel, pour une n-ième demande de connexion au réseau initiée par l'UE actuel pendant le délai, la règle prédéfinie est l'une des suivantes :
réduire la valeur Cn-1 correspondant à la n-ième demande de connexion au réseau d'un taux prédéfini de Cn-1 afin d'obtenir Cn comme crédibilité actuelle ; ou
réduire la valeur Cn-1 correspondant à la n-ième demande de connexion au réseau d'une valeur prédéfinie afin d'obtenir Cn comme crédibilité actuelle ; ou
déterminer Cn comme crédibilité actuelle selon une fonction de convergence prédéfinie et une valeur de n, la fonction de convergence prédéfinie convergeant vers une valeur minimale prédéfinie de crédibilité à mesure que la valeur de n augmente ;
où Cn représente la n-ième valeur mise à jour de la crédibilité actuelle de l'UE en question, et n est un entier positif.

4. Procédé de régulation selon la revendication 1, dans lequel le comportement anormal de la demande de connexion au réseau comprend au moins l'un des éléments suivants :
après réception de la demande de connexion au réseau émise par l'UE actuel et après avoir répondu à celle-ci par un message interactif, la station de base actuelle attend une réponse de la part de l'EU actuel pendant une durée supérieure à un délai prédéfini ; ou
la fréquence d'établissement et de libération des connexions entre l'UE actuel et la station de base actuelle dépasse une valeur de fréquence prédéfinie ; ou
le nombre de connexions établies entre l'EU actuel et la station de base actuelle dépasse un nombre prédéfini, et aucune donnée de service n'est générée après l'établissement de chaque connexion.

5. Procédé de régulation selon la revendication 1, comprenant en outre :
en réponse à la réception de chaque demande de connexion au réseau initiée par l'UE actuel, mettre à jour l'horodatage de la demande de connexion au réseau initiée par l'UE actuel (410) ; et
initialiser ou supprimer la crédibilité actuelle de l'UE actuel en fonction de l'heure de la station de base actuelle, de l'horodatage et d'un délai de vieillissement prédéfini (420).

6. Contrôleur comprenant au moins un processeur et une mémoire configurée pour communiquer avec ledit au moins un processeur, dans lequel la mémoire stocke des instructions exécutables par ledit au moins un processeur, et lesdites instructions, lorsqu'elles sont exécutées par ledit au moins un processeur, amènent ledit au moins un processeur à mettre en œuvre le procédé de régulation selon l'une quelconque des revendications 1 à 5.

7. Station de base, BS, comprenant le contrôleur selon la revendication 6.

8. Support de stockage non volatile lisible par ordinateur, contenant des instructions exécutables par ordinateur, configurées pour amener un ordinateur à mettre en œuvre le procédé de régulation selon l'une quelconque des revendications 1 à 5.
